# EUROPÄISCHE PATENTSCHRIFT

(11) **EP 1 488 683 B1**
(45) Veröffentlichungstag und Bekanntmachung des Hinweises auf die Patenterteilung: **29.11.2006**
(21) Anmeldenummer: 04014291.1
(22) Anmeldetag: 18.06.2004
(51) Int. Cl.: A01D 78/10

(54) **Heuwerbungsmaschine**
Haymaker
Machine de fenaison

(30) Priorität: 20.06.2003 DE 10327885
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr., 48480 Spelle (DE); Horstmann, Josef, Dr., 49479 Ibbenbüren (DE); Martensen, Klaus, Dr., 48477 Hörstel (DE); Afting, Andreas, 48488 Emsbüren (DE)

(56) Entgegenhaltungen:
- EP-A- 0 779 021
- EP-A- 0 937 382
- EP-A- 1 088 477
- EP-A- 1 433 372
- GB-A- 1 392 080

## Beschreibung

Die Erfindung bezieht sich auf eine Heuwerbungsmaschine, insbesondere zum Schwaden von landwirtschaftlichem Halmgut, mit vier umlaufend angetriebenen und über Stützräder auf dem Erdboden abstützbaren sowie über jeweils einen Ausleger aus einer Arbeitsstellung in eine verschwenkte Transportstellung überführbaren Kreiselrechen in in Fahrtrichtung im wesentlichen V-förmiger Anordnung.

Eine Heuwerbungsmaschine der vorgenannten Art ist beispielsweise aus der DE 197 16 379 C1 bekannt. Bei dieser Maschine sind vier Kreiselrechen vorgesehen, wobei jeweils zwei einander zugeordnete Kreiselrechen in Fahrtrichtung hintereinander angeordnet sind. Die beiden in Fahrtrichtung vorgeordnete Kreiselrechen bestimmen die maximale Arbeitsbreite und sind vor einer ungelenkten Maschinenachse gelegen. Zur Überführung in ihre Transportstellung sind die jeweiligen Kreiselrechen einwärts zu verschwenken. Die maximal mögliche Arbeitsbreite ist bei dieser Heuwerbungsmaschine gegenüber einer Heuwerbungsmaschine mit lediglich zwei Kreiselrechen deutlich erhöht, wird jedoch dem Wunsch nach noch größeren Arbeitsbreiten noch nicht gerecht, obgleich in der Transportstellung der Teile die Grenzen einer maximalen Transporthöhe schon erreicht sind.

Je größer bei größeren Arbeitsbreiten die Unterschiede der Abstände der Vertikallängsmittelachsen der jeweiligen Kreiselrechen vom sogenannten Momentanpol sind, desto eher verlieren die Kreiselrechen in Kurvenfahrten ihre Überdeckung und Halmgut geht verloren. Der Momentanpol ist hierbei als der Drehpunkt definiert, um den eine Heuwerbungsmaschine ihre Kurve fährt.

Aus der EP 1 088 477 A2 ist eine Heuwerbungsmaschine in Gestalt eines Zettwenders bekannt, welcher an einem ersten, quer zur Fahrtrichtung ausgerichteten Rahmen über Stützräder auf dem Erdboden abstützbare Zinkenkreisel aufweist. Diese Zinkenkreisel sind dabei so an dem ersten Rahmen angeordnet, dass sich in einem mittleren Bereich keine Zinkenkreisel befinden. Dieser mittlere, keine Zinkenkreisel aufweisende Bereich wird durch vier weitere, an einem zweiten quer zur Fahrtrichtung ausgerichteten Rahmen angebrachte Zinkenkreisel abgedeckt, wobei der zweite Rahmen parallel und bezogen auf die Fahrtrichtung der Heuwerbungsmaschine in geringem Abstand hinter dem ersten Rahmen angeordnet ist. Zur Anpassung an Bodenunebenheiten bei der Arbeit sind die ersten und zweiten Rahmen in Rahmenabschnitte unterteilt, welche jeweils um in Fahrtrichtung ausgerichtete Achsen schwenkbeweglich miteinander verbunden sind, wobei jeder Rahmenabschnitt einen Zinkenkreisel trägt. Die hier beschriebene Bauweise eignet sich jedoch nur zur Gestaltung von Heuwerbungsmaschinen mit großen Arbeitsbreiten, bei denen die Zinken der Zinkenkreisel während der Arbeit ineinander greifen können. Dies sind in der Hauptsache Heuwerbungsmaschinen zum Zetten und Wenden von Gras oder dgl. Erntegut. Maschinen zum Formen von Emtegutschwaden dagegen arbeiten mit Zinkenkreiseln, die nicht ineinander greifen, deren Arbeitsbreiten sich jedoch überdecken müssen.

Es ist daher Aufgabe der vorliegenden Erfindung, eine Heuwerbungsmaschine der eingangs genannten Art zu schaffen, bei der die wirksame Gesamtarbeitsbreite groß ist, bei der aber gleichwohl auch bei Kurvenfahrten noch ein gutes Heuwerbungsergebnis, insbesondere auch ein exaktes Schwadlegen von Halmgut möglich ist und die für eine Straßenfahrt zulässigen Abmessungen nicht überschritten werden.

Zur Lösung dieser Aufgabe zeichnet sich die Heuwerbungsmaschine der eingangs genannten Art dadurch aus, dass den Kreiselrechen zumindest ein weiterer, die maximale Arbeitsbreite vergrößernder Kreiselrechen beigeordnet ist, wobei der weitere Kreiselrechen am Ende eines weiteren verschwenkbaren Auslegers angeordnet ist, dessen zur Längsmittelachse der Maschine weisendes Ende eine am Fahrzeugchassis vorgesehene Schwenkachse aufweist, und wobei in Arbeitsstellung der Abstand in Fahrtrichtung der Vertikallängsmittelachse des weiteren Kreiselrechens von der Vertikallängsmittelachse des in Fahrtrichtung dahinter gelegenen Kreiselrechens kleiner ist als in der Transportstellung. Damit ist eine Heuwerbungsmaschine zur Verfügung gestellt, bei der in Arbeitsstellung der Kreiselrechen ein für eine korrekte Schwadlegung auch bei Kurvenfahrt genügend großer Überdeckungsgrad der in Fahrtrichtung hintereinander liegenden Kreiselrechenpaare gewährleistet ist. Gleichwohl sind diese in der Transportstellung ausreichend voneinander beabstandet und berührungsfrei in Fahrtrichtung hintereinander positioniert.

Damit ist eine Heuwerbungsmaschine zur Verfügung gestellt, bei der die wirksame Gesamtarbeitsbreite deutlich erhöht wurde. So sind Arbeitsbreiten von z. B. 20 m realisierbar, ohne die für eine Straßenfahrt zulässigen Gesamtabmessungen zu überschreiten.

Bei einer weiteren vorteilhaften Ausgestaltung der Erfindung bildet in Draufsicht eine Linie von der Vertikallängsmittelachse des weiteren Kreiselrechens hin zum Zentrum der Schwenkachse des zugehörigen Auslegers mit der Längsmittelachse der Heuwerbungsmaschine einen Winkel kleiner gleich 90° aus.

Um bei solch großen Arbeitsbreiten auch noch ein befriedigendes Heuwerbungsergebnis zu erzielen, ist es notwendig, dass der am Ende des weiteren Auslegers befindliche Kreiselrechen bezüglich des im Anspruch 6 beschriebenen Winkels angeordnet ist. Dies ermöglicht, dass in Arbeitsstellung der weitere Kreiselrechen dichter an den in Fahrtrichtung dahinter liegenden Kreiselrechen positioniert werden kann und sogar teilweise - bezogen auf die Längsmittelachse - überlappen kann, und dann aber in Transportstellung keine Probleme bei den nebeneinander eingeklappten und nun sich nicht mehr überlappenden Kreiselrechen entstehen. Hier ist es denkbar, dass durch verschieden große Winkel ein verschieden großer Abstand zwischen den Vertikallängsmittelachsen des vorgeordneten weiteren Kreiselrechens und des in Fahrtrichtung dahinter liegenden Kreisels eingestellt werden kann, um so die Heuwerbungsmaschine für beispielsweise besonders enge Kurvenfahrten anzupassen. Ein gutes Heuwerbungsergebnis wird also durch das im beschriebenen Winkel angelegte Ausleger-Kreiselrechen-Paar erreicht.

Dieses vorteilhafte Heuwerbungsergebnis ist auch zu erzielen, wenn der weitere Kreiselrechen in Abhängigkeit seines Durchmessers soweit an den nachgeordneten Kreiselrechen heranreicht, dass das kürzeste Abstandsmaß 0,1 bis 0,5 des Durchmessers des weiteren Kreiselrechens beträgt.

Bevorzugtermassen ist die erfindungsgemäße Heuwerbungsmaschine als selbstfahrende Heuwerbungsmaschine mit einer eigenen Fahrerkabine ausgebildet sowie mit einem weiteren zugeordneten Kreiselrechen, so dass insgesamt beidseitig je drei Kreiselrechen zusammen in in Fahrtrichtung im wesentlichen V-förmiger Position angeordnet sind. Hierbei bilden die beiden weiteren, in dieser Ausbildung nun in Fahrtrichtung vorgeordneten Kreiselrechen mit ihren Auslegern den besagten Winkel aus. Dieser Winkel führt von der Vertikallängsmittelachse des Kreiselrechens durch das Zentrum der Schwenkachse des Auslegers. Für den Fall, dass der Ausleger mehrere durch Schwenkachsen voneinander unterscheidbare Bereiche aufweist, ist hiermit der in Arbeitsstellung am dichtesten an der Längsmittelachse der Heuwerbungsmaschine liegende zu betrachten. Es ist auch denkbar, dass anstatt einer Schwenkachse zwei oder mehr Schwenkachsen vorhanden sind, wobei diese möglicherweise nicht parallel zueinander liegen. In einem solchen Fall wird eine Längsmittelachse des Auslegers zu bilden sein, dessen Schnittpunkt dann mit der Längsmittelachse der Heuwerbungsmaschine einen spitzen Winkel ausbildet.

Bei der erfindungsgemäßen Ausgestaltung einer Heuwerbungsmaschine befindet sich der weitere Kreiselrechen in Arbeitsstellung im wesentlichen seitlich einer Fahrerkabine. Somit ist für den Fahrer der Heuwerbungsmaschine die Möglichkeit gegeben, einen genauen Überblick über die Position des Kreiselrechens in bezug auf die zu bearbeitende Fläche zu erhalten. Außerdem ist es einfacher für ihn, unmittelbar vor den Kreiselrechen befindliche Gegenstände zu entdecken, und diesen möglicherweise auszuweichen.

Durch die Verschwenkung der beiden vorgeordneten, zusätzlichen Ausleger aus der Arbeits- und Betriebsstellung mitsamt den beiden vorgeordneten Kreiselrechen lässt sich der Kreiselrechen in eine Transportstellung im wesentlichen vor die Fahrerkabine bringen. Somit ist aufgrund der speziellen Ausführung der vorderen Ausleger in Transportstellung Platz für eine Fahrerkabine geschaffen.

Denkbar ist auch, dass es sich bei der erfindungsgemäßen Heuwerbungsmaschine um eine nicht selbstfahrende, sondern gezogene Heuwerbungsmaschine handelt, bei der insgesamt sechs Kreiselrechen über insgesamt sechs Ausleger abgestützt werden und mindestens zwei der Ausleger-Kreiselrechen-Paare den oben erwähnten spitzen Winkel ausbilden.

Eine weitere vorteilhafte Ausgestaltung der Erfindung zeigt, dass es sich bei den den spitzen Winkel ausbildenden Ausleger-Kreiselrechen-Paaren nicht um die in Fahrtrichtung zu vorderst liegenden Aggregate handelt, sondern dass sich diese beispielsweise in der Mitte der in Fahrtrichtung hintereinander liegenden drei Kreiselpaare befinden. In einem solchen Fall wäre der spitze Winkel der in Fahrtrichtung vor dem Ausleger befindliche Winkel und nicht, wie bisher beschrieben, der in Fahrtrichtung hinter dem Ausleger befindliche Winkel.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: eine schematische Draufsicht auf die in Arbeitsstellung befindliche Heuwerbungsmaschine nach der Erfindung;
- Fig. 2: eine schematische Seitenansicht der Heuwerbungsmaschine nach der Fig. 1 in Transportstellung.

In der Zeichnung ist allgemein eine mit 1 bezifferte Heuwerbungsmaschine gezeigt, die als selbstfahrende Heuwerbungsmaschine gemäß der Erfindung ausgebildet ist. Diese Heuwerbungsmaschine 1 weist eine Fahrerkabine 2, ein Fahrzeugchassis 3, sowie Laufräder 4 und eine Längsmittelachse 5 auf.

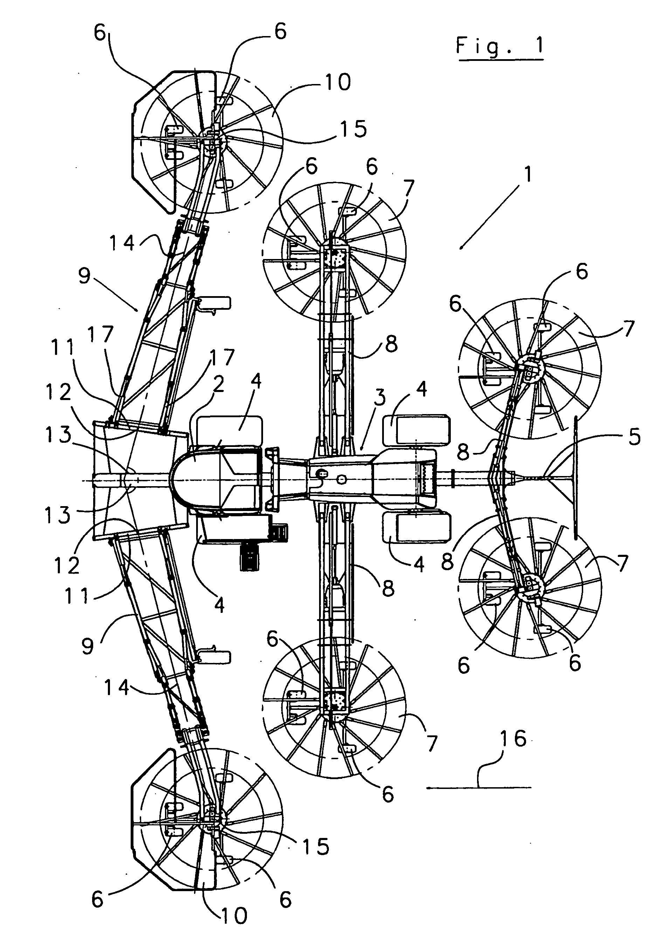

Die in Fig. 1 gezeigte Heuwerbungsmaschine 1 hat zunächst vier umlaufend angetriebene und über Stützräder 6 auf dem Erdboden abstützbare Kreiselrechen 7. Diese Kreiselrechen 7 sind an schwenkbaren Auslegern 8 angeordnet. Hierbei ist zu erkennen, dass die schwenkbaren Ausleger 8 nicht notwendigerweise aus nur einem einzigen strangförmigen Teil bestehen, sondern stattdessen aus mehreren Teilarmen, die möglicherweise auch noch mehrere Schwenkachsen aufweisen können.

Den vier Ausleger-Kreiselrechen-Paaren ist beidseitig der Längsmittelachse 5 der Heuwerbungsmaschine 1 jeweils ein weiteres Ausleger-Kreiselrechen-Paar, bestehend aus einem verschwenkbaren weiteren Ausleger 9 und einem weiteren Kreiselrechen 10, vorgeordnet. Diese beiden weiteren Kreiselrechen sind jeweils über bekannte Stützräder 6 abgestützt. Die beiden weiteren verschwenkbaren Ausleger 9 weisen jeweils eine an dem zur Längsmittelachse 5 liegenden Ende des weiteren verschwenkbaren Auslegers 9 befindliche Schwenkachse 11 auf, mit einem Zentrum 12 der Schwenkachse 11. Der im Anspruch 6 beschriebene Winkel 13 wird ausgebildet durch eine gestrichelt eingezeichnete Linie 14 zwischen der Vertikallängsmittelachse 15 der Kreiselrechen 10 durch das Zentrum 12 der Schwenkachse 11 hindurch zur Längsmittelachse 5 und eben jener Längsmittelachse 5. Der Winkel 13 befindet sich in Fahrtrichtung 16 hinter der Linie 14.

Somit ist erkennbar, dass der in Fahrtrichtung vor der Fahrerkabine 2 angeordnete weitere Ausleger 9 sich in Arbeitsstellung etwas nach hinten erstreckt, um in Arbeitsstellung eine im wesentlichen seitlich der Fahrerkabine 2 befindliche Position des Kreiselrechens 10 zu gewährleisten. Dieses ist insbesondere bei Maschinen dieser enormen Arbeitsbreite von beispielsweise 20 m zwecks Beibehaltung der Übersicht sehr wichtig. Des weiteren sind die Anbringung des weiteren Auslegers 9, sowie der Fahrerkabine 2 und der vordere Reifen 4 an der Heuwerbungsmaschine 1 räumlich stärker voneinander getrennt, was eine deutlich einfachere Konstruktion zur Folge hat. Durch die Realisierung des Winkels 13 ist somit zusätzlich ermöglicht, dass der beispielsweise in Fahrtrichtung rechts der Fahrerkabine liegende vordere weitere Kreiselrechen 10 in einer relativ dichten Position zum in Fahrtrichtung auf der rechten Seite liegenden mittleren Kreiselrechen 7 einnimmt. Genauso wie bereits durch den Hauptanspruch ermöglicht erzeugt dieses Merkmal die in Kurvenfahrt wichtige Überdeckung der beiden Kreiselrechen. Zusätzlich oder alternativ kann der weitere Kreiselrechen 10 so an den nachgeordneten Kreiselrechen 7 heranreichen, dass der kürzeste Abstand zwischen dem weiteren Kreiselrechen 10 und dem nächststehenden Kreiselrechen 7 in Arbeits- und Betriebsstellung 10 % bis 50% des Durchmessers weiteren Kreiselrechens ist.

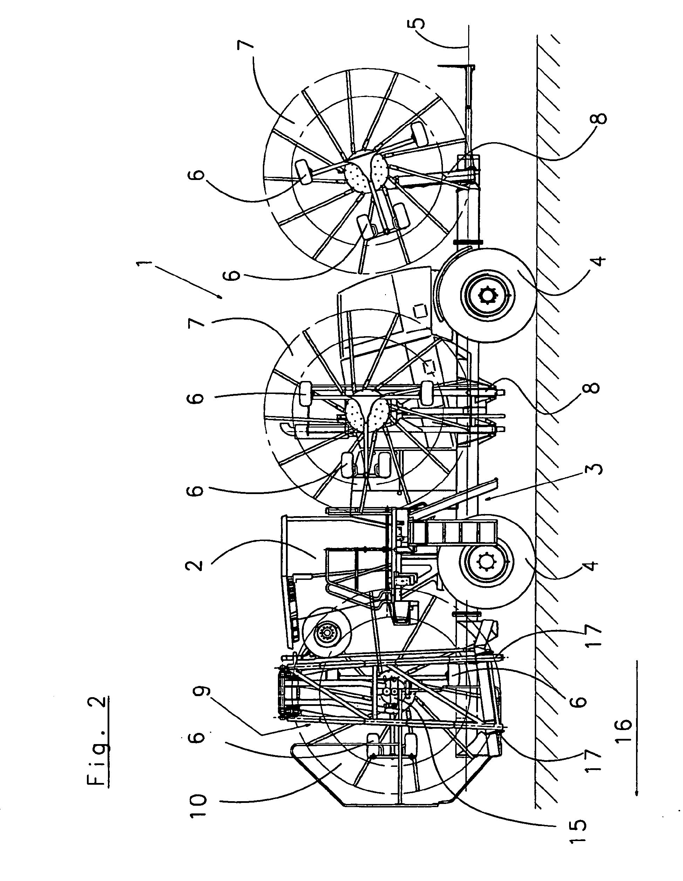

Ein weiterer großer Vorteil dieser Art der Auslegergestaltung ist in Fig. 2 ersichtlich. Hier ist eine Heuwerbungsmaschine 1 in Transportposition gezeigt, wobei sämtliche Kreiselrechen 7, 10 in eine im wesentlichen vertikal zu ihrer Arbeitsposition befindlichen Position zum Fahrzeug hin verschwenkt sind. Durch die bereits erwähnte Ausbildung des vorderen weiteren Auslegers 9 mit dem weiteren Kreiselrechen 10 befindet sich dieser in Transportposition im wesentlichen in Fahrtrichtung 16 vor der Fahrerkabine 2. Somit ist es möglich, die maximal zulässige Gesamtbreite eines Fahrzeuges für den Straßentransport nicht zu überschreiten, was bei einer Anbringung des weiteren verschwenkbaren Auslegers 9 auf in Fahrtrichtung gesehener Höhe der Fahrerkabine 2 nicht möglich wäre.

Der weitere verschwenkbare Ausleger 9 ist ebenso wie die übrigen schwenkbaren Ausleger 8 in eine im wesentlichen senkrechte und parallel zur vertikalen Längsmittelebene verlaufende Position eingeschwenkt. Mehrere, hier nicht näher bezeichnete Schwenkachsen im Verlauf des Auslegers 9 sorgen dafür, dass die maximal für die Straßenfahrt zulässige Gesamthöhe eines Fahrzeugs nicht überschritten wird. Weiterhin ist der Ausleger 9 aus verschiedenen Auslegerteilen aufgebaut, wobei das Zentrum 12 der Schwenkachse 11 in etwa mittig zwischen den beiden in Arbeitsstellung zur Längsmittelachse 5 hin gerichteten Teilauslegem 17 liegt.

In diesem Fall würde der analog zu bildende spitze Winkel zwischen einer Linie entlang der Ausleger 9 hin zur Längsmittelachse 5 in Fahrtrichtung vor einer Linie 14 liegen.
Bei einer anderen nicht dargestellten Ausführungsform der Erfindung ist es denkbar, dass es sich bei den den spitzen Winkel ausbildenden Ausleger-Kreiselrechen-Paaren nicht um die in Fahrtrichtung zu vorderst liegenden Aggregate handelt, sondern das sich diese beispielsweise in der Mitte der in Fahrtrichtung (16) hintereinander liegenden drei Ausleger-Kreiselrechen-Paaren befinden. In einem solchen Fall wäre der spitze Winkel der in Fahrtrichtung (16) vor dem mittleren Ausleger (8) befindliche Winkel und nicht, wie bisher beschrieben, der in Fahrtrichtung hinter dem Ausleger (9) befindliche Winkel.

Es ist selbstverständlich, dass die aus Vorstehendem ersichtliche Erfindung nicht nur bei Heuwerbungsmaschinen, sondern auch bei solchen Maschinen mit anderen rotierenden Werkzeugen Anwendung finden kann, wo es auf die Lage des Momentanpol und zum Beispiel eine saubere Erntegutablage ankommt. So können beispielsweise auch Mähmaschinen mit rotierenden Mähwerken in analoger Anordnung der Mähwerke wie die Kreiselrechen mit entsprechenden Abständen vorgesehen sein.

Insgesamt ist durch die erfindungsgemäße Konstruktion der zusätzlichen Ausleger-Kreiselrechen-Paare eine Heuwerbungsmaschine 1 entstanden, die bei einer maximalen Arbeitsbreite von beispielsweise 20 m in Transportstellung nicht die maximal zulässigen Maße für die Straßenfahrt überschreitet und somit in idealer Weise die oben genannte Aufgabe löst.

## Patentansprüche

1. Heuwerbungsmaschine, insbesondere zum Schwaden von landwirtschaftlichem Halmgut, mit vier umlaufend angetriebenen und über Stützräder auf dem Erdboden abstützbaren sowie über jeweils einen Ausleger (8) aus einer Arbeitsstellung in eine verschwenkte Transportstellung überführbaren Kreiselrechen (7) in in Fahrtrichtung im wesentlichen V-förmiger Anordnung, **dadurch gekennzeichnet, dass** den Kreiselrechen (7) zumindest ein weiterer, die maximale Arbeitsbreite vergrößernder Kreiselrechen (10) beigeordnet ist, wobei der weitere Kreiselrechen (10) am Ende eines weiteren verschwenkbaren Auslegers (9) angeordnet ist, dessen zur Längsmittelachse (5) der Maschine weisendes Ende eine am Fahrzeugchassis (3) vorgesehene Schwenkachse (11) aufweist, und wobei in Arbeitsstellung der Abstand in Fahrtrichtung der Vertikallängsmittelachse (15) des weiteren Kreiselrechens (10) von der Vertikallängsmittelachse des in Fahrtrichtung dahinter gelegenen Kreiselrechens (7) kleiner ist als in der Transportstellung.

2. Heuwerbungsmaschine nach Anspruch 1, **dadurch gekennzeichnet, dass** der weitere Kreiselrechen (10) aus einer in etwa horizontalen Arbeitsstellung in eine relative Hochlage einschwenkbar und dabei zum Erreichen einer Transportstellung in die Fahrtrichtung (16) verschwenkbar ausgebildet ist.

3. Heuwerbungsmaschine nach einem der Ansprüche 1 oder 2, **dadurch gekennzeichnet, dass** den vier Kreiselrechen (7) beidseitig jeweils ein an einem weiteren verschwenkbaren Ausleger (9) abstützbarer weiterer Kreiselrechen (10) vorgeordnet ist.

4. Heuwerbungsmaschine nach einem der Ansprüche 1 bis 3, **dadurch gekennzeichnet, dass** die Heuwerbemaschine (1) als selbstfahrende Heuwerbemaschine ausgebildet ist.

5. Heuwerbungsmaschine nach Anspruch 4, **dadurch gekennzeichnet, dass** der in Arbeitsstellung im wesentlichen seitlich einer Fahrerkabine (2) befindliche weitere Kreiselrechen (10) durch eine Verschwenkung des Auslegers (9) in eine Transportstellung im wesentlichen vor der Fahrerkabine (2) verschwenkbar gehalten ist.

6. Heuwerbemaschine nach einem der Ansprüche 1 bis 5, **dadurch gekennzeichnet, dass** in Draufsicht eine Linie (14) von der Vertikallängsmittelachse (15) des weiteren Kreiselrechens (10) hin zum Zentrum (12) der Schwenkachse (11) des zugehörigen Auslegers mit der Längsmittelachse (5) der Heuwerbungsmaschine (1) einen Winkel (13) kleiner gleich 90° ausbildet.

7. Heuwerbungsmaschinemaschine nach Anspruch 4, **dadurch gekennzeichnet, dass** in Transportstellung der Abstand der Vertikallängsmittelachse (15) des weiteren Kreiselrechens (10) von der in Fahrtrichtung dahinter gelegenen Vertikallängsmittelachse des nächsten Kreiselrechens (7) größer ist als die Längserstreckung der Fahrerkabine (2).

8. Heuwerbungsmaschine nach einem der Ansprüche 1 bis 7, **dadurch gekennzeichnet, dass** eine durch Stellmittel des weiteren Auslegers (9) bewirkte Veränderung des Winkels (13) den am Ende des Auslegers (9) befindlichen Kreiselrechen um den Schnittpunkt der Linien (14) mit der Längsmittelachse (5) verschwenkt und so die maximale Arbeitsbreite verändert.

9. Heuwerbungsmaschine nach Anspruch 8, **dadurch gekennzeichnet, dass** an einer Lenkung der Maschine angeordnete Steuerungsmittel in Abhängigkeit des Lenkeinschlages angebrachte Stellmittel des weiteren Auslegers (9) zur Veränderung des Winkels (13) steuern.

10. Heuwerbungsmaschine nach Anspruch 4, **dadurch gekennzeichnet, dass** bei der als selbstfahrende Heuwerbungsmaschine ausgebildeten Heuwerbungsmaschine (1) ein Kreiselrechenpaar in Fahrtrichtung (16) vor der gelenkten Maschinenachse, ein Kreiselrechenpaar zwischen der gelenkten und der ungelenkten Maschinenachse und die beiden Kreiselrechen (7) hinter der ungelenkten Maschinenachse angeordnet sind.

11. Heuwerbungsmaschine nach einem der Ansprüche 1 bis 10, **dadurch gekennzeichnet, dass** der kürzeste Abstand zwischen dem weiteren Kreiselrechen (10) und dem benachbarten Kreiselrechen (7) 10 % bis 50 % des Durchmessers des weiteren Kreiselrechens (10) beträgt

## Claims

1. Haymaker, particularly for windrowing stalked agricultural crops, having four rotary rakes (7) in a substantially V-shaped arrangement in the direction of travel, which rotary rakes (7) are driven in rotation, are able to be supported on the ground by means of supporting wheels and are able to be transferred from a working position to a pivoted position for transport by means of respective booms (8), **characterised in that** the rotary rakes (7) have associated with them at least one further rotary rake (10) which increases the maximum working width, the further rotary rake (10) being arranged at the end of a further pivotable boom (9) whose end which points towards the longitudinal centre axis (5) of the machine has a pivot shaft (11) provided on the chassis (3) of the vehicle, and the distance in the direction of travel between the vertical longitudinal centre axis (15) of the further rotary rake (10) and the vertical longitudinal centre axis of the rotary rake (7) which is situated behind it in the direction of travel being smaller in the working position than in the position for transport.

2. Haymaker according to claim 1, **characterised in that** the further rotary rake (10) is designed to be able to be pivoted in from an approximately horizontal working position to a relatively raised position, and in the course of this to be able to be pivoted in the direction of travel (16) to reach a position for transport.

3. Haymaker according to either of claims 1 and 2, **characterised in that** the four rotary rakes (7) have positioned in front of them, on each of the two sides, a further rotary rake (10) which is able to be supported on a further pivotable boom (9).

4. Haymaker according to one of claims 1 to 3, **characterised in that** the haymaker (1) is in the form of a self-propelled haymaker.

5. Haymaker according to claim 4, **characterised in that** the further rotary rake (10), which is situated substantially sideways from the driver's cab (2) in the working position, is held in such a way as to be pivotable, by a pivoting movement of the boom (9), to a position for transport substantially in front of the driver's cab (2).

6. Haymaker according to one of claims 1 to 5, **characterised in that**, seen in plan, a line (14) from the vertical longitudinal centre axis (15) of the further rotary rake (10) to the centre (12) of the pivot shaft (11) of the associated boom makes an angle (13) equal to or less than 90° with the longitudinal centre axis (5) of the haymaker (1)

7. Haymaker according to claim 4, **characterised in that**, in the position for transport, the distance between the vertical longitudinal centre axis (15) of the further rotary rake (10) and the vertical longitudinal centre axis of the next rotary rake (7) which is situated behind it in the direction of travel is greater than the longitudinal extent of the driver's cab (2).

8. Haymaker according to one of claims 1 to 7, **characterised in that** a change in the angle (13) produced by means for positioning the further boom (9) pivots the rotary rake situated at the end of the boom (9) about the point at which the lines (14) intersect the longitudinal centre axis (5) and in this way changes the maximum working width.

9. Haymaker according to claim 8, **characterised in that** control means arranged on steering of the haymaker control mounted means for positioning the further boom (9) to change the angle (13), as a function of the steering angle.

10. Haymaker according to claim 4, **characterised in that**, when the haymaker (1) is in the form of a self-propelled haymaker, one pair of rotary rakes is arranged, in the direction of travel (16), in front of the steered axle of the haymaker, one pair of rotary rakes is arranged between the steered and unsteered axles of the haymaker, and the two rotary rakes (7) are arranged behind the unsteered axle of the haymaker.

11. Haymaker according to one of claims 1 to 10, **characterised in that** the shortest distance between the further rotary rake (10) and the adjoining rotary rake (7) is 10% to 50% of the diameter of the further rotary rake (10).

## Revendications

1. Machine de fenaison, notamment pour andainer des produits agricoles en tiges, comportant quatre rotors rateleurs (7) s'appuyant sur le sol par des roues de sustentation et qui peuvent passer d'une position de travail à une position de transport, basculée, par l'intermédiaire d'un bras (8) respectif, ces rotors étant installés suivant une disposition principalement en forme de V dans la direction de déplacement,
**caractérisée en ce qu'**
au moins un autre rotor rateleur (10) augmentant la largeur maximale de travail est associé aux rotors (7),
cet autre rotor rateleur (10) étant porté par l'extrémité d'un autre bras (9) basculant ayant un axe de basculement (11) prévu sur le châssis (3) du véhicule et dirigé vers l'axe longitudinal médian (5) de la machine, et
en position de travail, la distance dans la direction de déplacement entre l'axe central vertical (15) de cet autre rotor rateleur (10) et l'axe central vertical du rotor rateleur (7) situé derrière celui-ci dans la direction de déplacement, est inférieure à cette distance en position de transport.

2. Machine de fenaison selon la revendication 1,
**caractérisée en ce que**
l'autre rotor rateleur (10) peut être basculé de sa position de travail sensiblement horizontale dans une position relativement haute, et arriver ainsi dans une position de transport, le basculement se faisant par rapport à la direction de déplacement (16).

3. Machine de fenaison selon l'une des revendications 1 ou 2,
**caractérisée en ce qu'**
aux quatre rotors rateleurs (7) sont associés des deux côtés, chaque fois un autre rotor rateleur (10) s'appuyant sur un autre bras basculant (9).

4. Machine de fenaison selon l'une des revendications 1 à 3,
**caractérisée en ce que**
la machine de fenaison (1) est une machine automotrice.

5. Machine de fenaison selon la revendication 4,
**caractérisée en ce que**
l'autre rotor rateleur (10) qui en position de travail, se trouve pratiquement à côté de la cabine de conducteur (2) peut être tenu en basculement par le basculement du bras (9) dans une position de transport située principalement devant la cabine de conducteur (2).

6. Machine de fenaison selon l'une des revendications 1 à 5,
**caractérisée en ce qu'**
en vue de dessus, une ligne (14) passant par l'axe central vertical (15) de l'autre rotor rateleur (10) jusqu'au milieu (12) de l'axe de basculement (11) du bras supplémentaire, forme un angle (13) inférieur ou égal à 90°avec l'axe longitudinal médian (5) de la machine de fenaison (1).

7. Machine de fenaison selon la revendication 4,
**caractérisée en ce qu'**
en position de transport, la distance de l'axe central vertical (15) de l'autre rotor rateleur (10) par rapport à l'axe central vertical du rotor rateleur (7) suivant, situé derrière lui dans la direction de déplacement, est plus grand que l'extension longitudinale de la cabine de conducteur (2).

8. Machine de fenaison selon l'une des revendications 1 à 7,
**caractérisée par**
une modification de l'angle (13) bras (9), bascule le rotor rateleur à l'extrémité du bras (9) autour du point d'intersection de la ligne (14) et de l'axe longitudinal médian (5) et modifie ainsi la largeur maximale de travail.

9. Machine de fenaison selon la revendication 8,
**caractérisée en ce que**
des moyens de commande équipant une direction de la machine permettent de commander en fonction du braquage, le moyen de réglage de l'autre bras (9) pour modifier l'angle (13).

10. Machine de fenaison selon la revendication 4,
**caractérisée en ce que**
pour une machine de fenaison en forme d'une machine de fenaison automotrice (1), une paire de rotors rateleurs se situe selon la direction de déplacement (16), en amont de l'essieu directeur de la machine, une paire de rotors rateleurs se trouve entre l'essieu directeur et l'essieu fixe de la machine et les deux rotors rateleurs (7) sont installés derrière l'essieu fixe de la machine.

11. Machine de fenaison selon l'une des revendications 1 à 10,
**caractérisée en ce que**
la distance la plus courte entre l'autre rotor rateleur (10) et le rotor rateleur voisin (7) représente entre 10 % et 50 % du diamètre de l'autre rotor rateleur (10).
